# FASCICULE DE BREVET EUROPEEN

(11) **EP 2 937 723 B1**
(45) Date de publication et mention de la délivrance du brevet: **05.04.2017**
(21) Numéro de dépôt: 15164747.6
(22) Date de dépôt: 22.04.2015
(51) Int. Cl.: G02B 6/42

(54) **PROCÉDÉ DE FIXATION D'UNE FIBRE OPTIQUE AVEC UN SUPPORT D'UNE DIODE LASER**
VERFAHREN ZUR BEFESTIGUNG EINER OPTISCHEN FASER MIT EINER HALTERUNG EINER LASERDIODE
METHOD FOR ATTACHING AN OPTICAL FIBRE TO A MOUNTING OF A LASER DIODE

(30) Priorité: 22.04.2014 FR 1453623
(43) Date de publication de la demande: 28.10.2015
(73) Titulaire: KEOPSYS, 22300 Lannion (FR)
(72) Inventeur: Le Flohic, Marc, 22560 PLEUMEUR BODOU (FR); Candela, Yves, 78480 VERNEUIL-SUR-SEINE (FR); Bordais, Sylvain, 22300 LANNION (FR)
(74) Mandataire: Ermeneux, Bertrand

(56) Documents cités:
- US-A- 5 793 915
- US-B1- 6 659 659

## Description

### 1. Domaine de l'invention

Le domaine de l'invention est celui de l'optoélectronique. Un domaine connexe de l'invention est celui des lasers.

Plus précisément, l'invention concerne un procédé de fixation d'une fibre optique avec un support d'une diode laser.

L'invention trouve notamment une application dans la mise en oeuvre de diodes lasers packagées et de diodes lasers de pompe.

### 2. Etat de la technique

La consommation et la durée de vie d'un appareil optoélectronique fibré émetteur dépend directement de la qualité du couplage optique entre la fibre optique et le laser, ou la diode laser, qu'il renferme.

Lorsque le couplage optique est optimal, le laser ou la diode laser s'échauffe peu, ce qui permet de réduire les pertes de performance résultant de l'échauffement de l'appareil et évite une détérioration trop rapide de l'appareil. En outre, aucun refroidisseur thermo-électrique n'est nécessaire, ce qui permet de réduire le coût et l'encombrement de l'appareil.

Afin de garantir la qualité du couplage optique il est nécessaire de pouvoir maintenir la fibre optique et le laser, ou la diode laser, alignés avec précision. On admet généralement que pour garantir un couplage optimal, l'alignement de la fibre et du laser doit être précis à moins d'un micromètre suivant toutes les directions.

Il est connu d'utiliser un dispositif d'alignement monté sur calle pour maintenir une fibre optique et une diode laser alignées dans un boitier laser fibré.

Un inconvénient de cette technique mettant en oeuvre un dispositif d'alignement est qu'il faut prévoir un espace dans le boitier pour insérer le dispositif d'alignement et la calle, ce qui ne permet pas de réaliser des boitiers compacts.

Par ailleurs, cette technique est complexe à mettre en oeuvre.

Afin de remédier à cet inconvénient, on a proposé de fixer la fibre optique directement au boitier.

On connait une technique consistant à souder avec du métal d'apport une férule, sertie autour de la fibre optique, au boitier contenant le laser ou la diode laser.

Un inconvénient de cette technique de soudage est qu'il se produit au coeur de la soudure des microfissures lors de son refroidissement, ce qui ne permet pas de garantir le positionnement de la fibre optique.

Un autre inconvénient de cette technique de soudage connue est qu'une soudure épaisse peut se déformer avec le temps ou se dilater ou se contracter lorsque la température varie.

On a ainsi pensé à coller la fibre optique dans une ouverture du boitier à l'aide d'une résine époxy.

Un inconvénient de cette technique de collage résulte du fait que la résine se déforme avec le temps ou suite à des variations de température, ce qui a pour conséquence de détériorer le couplage optique entre la fibre optique et la diode laser.

On connait également une technique destinée à sécuriser la position de la fibre optique qui consiste à maintenir la fibre optique à l'aide de deux manchons de diamètres différents, qui vont être soudés sur la paroi extérieure du boitier.

Cette technique connue présente l'inconvénient d'augmenter l'encombrement extérieur du boitier.

Un autre inconvénient de cette technique connue est qu'il n'est pas possible de réaliser une reprise de l'alignement.

Les documents US 5,793,915 et US 6,659,659 B1 décrivent un procédé de fixation d'une fibre optique avec un support d'une diode laser.

### 3. Objectifs de l'invention

L'invention a donc notamment pour objectif de pallier les inconvénients de l'état de la technique cités ci-dessus.

Plus précisément l'invention a pour objectif de fournir une technique de fixation d'une fibre optique avec un support d'une diode laser qui permette de maintenir un alignement précis de la fibre optique avec la diode laser.

Un objectif de l'invention est également de fournir une telle technique de fixation d'une fibre optique qui soit simple à mettre en oeuvre et peu coûteuse.

Un autre objectif de l'invention est de fournir une technique de fixation d'une fibre optique qui soit fiable.

Encore un objectif de l'invention est de fournir une technique qui permette une mise en oeuvre d'un support compact.

### 4. Exposé de l'invention

Ces objectifs, ainsi que d'autres qui apparaitront par la suite sont atteints à l'aide d'un procédé de fixation d'une fibre optique avec un support d'une diode laser dans une position où la fibre optique est en relation de couplage optique avec ladite diode laser, ledit support comprenant une lumière formée dans une paroi dudit support destinée au passage de ladite fibre.

L'invention concerne donc la fabrication d'une diode laser fibrée obtenue par le seul alignement de la fibre optique par l'extérieur, sans utilisation d'un dispositif d'alignement intermédiaire monté sur calle entre la fibre optique et la diode laser.

Selon l'invention, un tel procédé de fixation d'une fibre optique comprend les étapes suivantes :
- fixation hermétique d'une férule sur ladite fibre optique sensiblement à une extrémité de ladite fibre, ladite férule présentant une longueur supérieure à l'épaisseur de ladite lumière ;
- montage d'une première et d'une deuxième rondelles en vis-à-vis de ladite lumière de part et d'autre de ladite paroi, ladite première rondelle étant montée au contact de ladite paroi ;
- mise en place de ladite férule, de sorte que ladite férule dépasse desdites rondelles de chaque côté de ladite paroi comprenant une étape d'insertion de ladite fibre optique dans ladite première rondelle et dans ladite lumière ;
- alignement de ladite fibre optique avec ladite diode laser dans une position optimisant le couplage optique entre ladite fibre et ladite diode et soudage par laser desdites rondelles avec ladite férule comprenant une étape d'émission d'un faisceau laser sensiblement tangent au plan de la paroi et sensiblement perpendiculaire à l'axe de ladite fibre ;
- alignement de ladite fibre optique avec ladite diode laser dans une position optimisant le couplage optique entre ladite fibre et ladite diode et soudage par laser desdites rondelles avec ladite paroi comprenant une étape d'émission d'un faisceau laser sensiblement tangent au plan de la paroi et sensiblement perpendiculaire à l'axe de ladite fibre.

Ainsi, de façon inédite, l'invention propose de fixer la fibre optique au support de la diode à la fois par l'intérieur et l'extérieur du support à l'aide de rondelles en figeant successivement la position longitudinale puis la position transversale de la fibre optique par rapport au support.

Les tirs de soudure étant sensiblement tangents au plan de la paroi, ceci permet avantageusement de produire des diodes laser fibrées compactes. Par ailleurs, les tirs de soudure étant avantageusement sensiblement perpendiculaires à l'axe de la fibre, il ne se produit pas de déplacement de la fibre optique suivant son axe lors de la première étape de soudure des rondelles avec la férule.

Le procédé selon l'invention s'avère en outre particulièrement simple à mettre en oeuvre et permet des cadences de production élevées.

Dans un mode de réalisation particulier de l'invention, lors de ladite étape de montage, ladite deuxième rondelle est montée au contact de ladite paroi et en ce que lors de ladite étape d'insertion, ladite fibre optique est insérée dans lesdites première et deuxième rondelles et dans ladite lumière.

Selon un aspect préférentiel de l'invention, lors de ladite étape d'insertion de ladite fibre, moins de 1,5 millimètre de l'extrémité de ladite fibre tournée vers ladite diode laser fait saillie hors de la rondelle plaquée contre la face de ladite paroi tournée vers ladite diode laser.

Il est ainsi possible de placer la diode laser très proche de la paroi interne du support, ce qui permet de concevoir un support très compact.

Selon un mode de réalisation particulier de l'invention, lesdites étapes de soudage laser comprennent une étape de réalisation d'au moins un point de soudure entre ladite férule et une desdites rondelles et d'au moins un point de soudure entre ladite rondelle soudée à ladite férule et ladite paroi.

Le fait de réaliser des points de soudure permet en effet d'éviter une dilatation de la férule et/ou des rondelles par échauffement et par conséquent un décalage de la position prévue de la soudure et donc de la position de la fibre optique.

Préférentiellement, deux points de soudure sont réalisés entre ladite férule et au moins une desdites rondelles et/ou entre au moins une desdites rondelles et ladite paroi, sensiblement à angle droit l'un par rapport à l'autre par rapport à l'axe central de ladite fibre.

Ainsi, on fixe rigidement la férule avec les rondelles et la paroi.

De façon avantageuse, ladite fibre optique est une fibre optique lentillée dont ladite extrémité présente un pic en forme de double biseau dont la pointe forme une arête.

L'utilisation d'une fibre lentillée ne rend ainsi pas nécessaire la mise en oeuvre d'une lentille intermédiaire entre la fibre et la diode laser, ce qui réduit les pertes de puissance optique entre la diode laser émettrice et la fibre optique réceptrice.

Selon un aspect particulier de l'invention, la fibre optique peut être mono- ou multi-modale.

Selon un aspect particulier de l'invention, ladite arête est courbe.

Dans un mode de réalisation particulièrement avantageux de l'invention, deux points de soudure sont réalisées entre ladite férule et au moins une desdites rondelles ou entre au moins une desdites rondelles et ladite paroi suivant une direction sensiblement parallèle à ladite arête.

On fige ainsi solidement la position de l'arête.

Dans un mode de réalisation particulier de l'invention, ladite lumière est formée au moins partiellement dans une partie saillante de ladite paroi tournée vers l'extérieur dudit support.

Dans une variante de ce mode de réalisation, la face tournée vers l'extérieure de ladite paroi peut être plane.

Avantageusement, lesdites rondelles sont magnétisées.

Il peut notamment s'agir de rondelles en matériau ferromagnétique.

Selon un aspect avantageux de l'invention, l'orifice central desdites rondelles est biseauté par rapport à l'axe de la rondelle, afin de faciliter le passage de la férule.

De préférence, ladite lumière présente un diamètre supérieur à celui de ladite férule.

La fibre optique peut ainsi être insérée facilement au travers de la lumière.

Dans un mode de réalisation particulier de l'invention, ledit support est un boitier apte à être scellé hermétiquement.

Selon un mode de réalisation particulier de l'invention, un procédé de fixation d'une fibre optique tel que décrit ci-dessus comprend une étape de dépose au travers d'au moins un orifice formé dans ladite paroi, d'un alliage de soudure autour de ladite férule destiné à assurer l'étanchéité de ladite paroi au niveau de ladite lumière.

On réalise ainsi une étanchéité convenable et durable dans le temps de la paroi.

Selon un mode de réalisation particulier de l'invention, au moins un desdits points de soudure est réalisé sur la tranche d'une desdites rondelles.

Ainsi, le faisceau laser émis lors des tirs de soudure n'endommage pas la couche d'or plaqué sur la férule.

Avantageusement, ladite première rondelle et/ou ladite deuxième rondelle présente une portion plus mince destinée à recevoir un desdits points de soudure.

La portion plus mince de la rondelle peut ainsi fondre localement, ce qui permet d'obtenir un point de soudure plus large et donc plus robuste. De plus, la fusion de la rondelle permet de combler le jeu entre la rondelle et la férule ou la paroi.

Dans le cadre de l'invention, on entend par le terme portion plus mince, une portion d'épaisseur, dans une direction perpendiculaire à l'axe de la rondelle, inférieure ou égale à 250 µm, de préférence inférieure ou égale à 150 µm.

Selon un mode de réalisation particulier de l'invention, lesdites rondelles sont en Kovar (marque déposée) pur.

Les autres pièces soudées par laser, comme le boîtier ou la férule, peuvent être fabriquées dans un alliage Ferro-Nickel-Cobalt, de type Kovar (marque déposée), sans traitement de surface, ce qui permet des soudures laser sans fissure.

Selon un aspect avantageux de l'invention, la portion de rondelle destinée à être éclairée par le laser possède une épaisseur qui est inférieure ou égale à 250 µm.

Avantageusement, le diamètre de ladite lumière est supérieur d'au moins 400 µm à celui de ladite férule.

### 5. Liste des figures

D'autres caractéristiques et avantages de l'invention apparaitront plus clairement à la lecture de la description suivante de modes de réalisation de l'invention, donnés à titre de simples exemples illustratifs et non limitatifs, et des dessins annexés parmi lesquels :
- la figure 1 est une vue schématique d'une installation pour la mise en oeuvre d'un procédé de fixation d'une fibre optique sur un boitier support d'une diode laser selon l'invention, avant que la fibre optique soit mise en place dans le boitier ;
- la figure 2 est une vue de détail en coupe du boitier présenté en référence à la figure 1 ;
- les figures 3a et 3b sont des vues de détail en coupe, respectivement dans un plan transversal et dans un plan longitudinal à la fibre optique, de la zone d'extrémité de la fibre optique présentée en référence aux figures 1 et 2 ;
- les figures 4a et 4b illustrent un autre exemple de réalisation d'une fixation d'une fibre optique à un support de diode laser ;
- la figure 5 est une vue schématique d'un autre exemple de poste de montage pour la mise en oeuvre d'un procédé de fixation d'une fibre optique sur un boîtier support d'une diode laser selon l'invention, avant que la fibre optique soit mise en place dans le boîtier;
- la figure 6 est une vue de détail en coupe de la zone de fixation de la fibre optique fixée avec le boîtier présenté en référence à la figure 5 ;
- les figures 7a et 7b sont des vues de détail, respectivement dans un plan transversal et en coupe dans un plan longitudinal à la fibre optique, de la zone d'extrémité de la fibre optique présentée en référence aux figures 5 et 6 ;
- les figures 8a et 8b sont des vues de détail, respectivement dans un plan transversal et dans un plan longitudinal à la fibre optique, de la zone d'entrée dans le boîtier, de la fibre optique présentée en référence aux figures 5 et 6.

### 6. Descrintion détaillée de l'invention

### 6.1 Exemple de mode de réalisation de l'invention

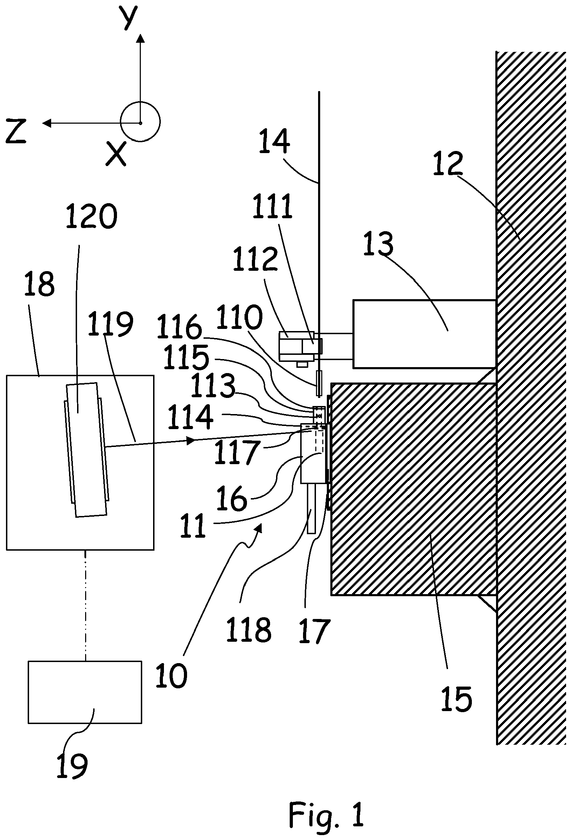

On a illustré en référence à la figure 1 une installation 10 de montage d'une diode laser fibrée équipée pour fixer une fibre optique 14 avec un boitier optoélectronique 16 contenant une diode laser semi-conductrice 11, en mettant en oeuvre un procédé de fixation selon l'invention.

Sur la figure 1, la fibre optique 14 est représentée dans une position précédent sa mise en place et sa fixation dans le boitier 16.

Dans ce mode de réalisation particulier de l'invention, la fibre optique 14 est une fibre optique lentillée et la diode laser 11 est une diode semi-conductrice alimentée électriquement par des électrodes 15.

Une férule 110 est soudée hermétiquement autour de la fibre optique 14 par une soudure de type verre-métal, à une distance de quelques centaines de micromètre de la pointe de la fibre optique 14.

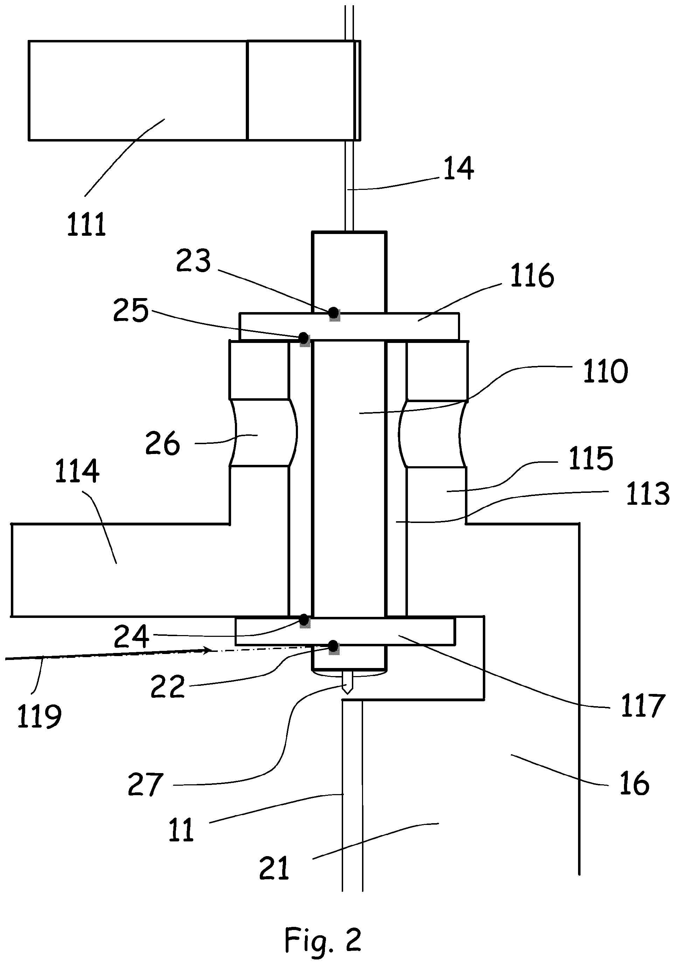

Comme on peut le voir sur la figure 2 qui est une vue de détail d'une coupe du boitier 16 après fixation de la fibre optique 14 sur le boitier en position de couplage optique avec la diode laser 11, la fibre optique 14 présente à son extrémité une pointe lentillée 27 en forme de double biseau de façon à réduire les pertes de puissance dans le couplage. On notera que sur la figure 2, la pointe de la fibre optique a été représentée grossie, afin de pouvoir la distinguer de la férule.

Pour éviter par ailleurs tout risque de déplacement de la diode laser 11, celle-ci est brasée sur une embase 21 formée sur la base du boitier 16.

Le boitier en acier 16 contenant la diode laser 11 est ouvert sur le dessus et peut être scellé à l'aide d'un couvercle (non représenté sur cette figure).

Ce boitier 16 présente un passage de fibre formant lumière 113 formé dans la paroi 114 du boitier 16 et qui se prolonge dans une portion tubulaire 115 qui fait saillie hors du boiter 16 à partir de la paroi 114.

La base 17 du boitier est vissée sur le socle 15.

Le socle 15 est fixé sur une table anti-vibratile 12 et est régulé en température pour travailler à un point de fonctionnement en température donné.

Un ensemble de micro-positionnement trois axes 13 destiné à déplacer la fibre optique 14 est posé sur la table 12 à proximité du socle 15.

L'ensemble 13 est équipé de platines de translation commandées par des actionneurs (non représentées sur cette figure) et se prolonge par un préhenseur de fibre optique 111 qui enserre la fibre optique 14 à l'aide mâchoires 112 fermées par air comprimé.

Le socle 15 est placé au dessous d'une tête de soudage laser mobile 18 reliée à un laser Nd:YAG pulsé 19 par deux fibres optiques protégées par d'épaisses gaines. Le laser YAG 19 présente une puissance crête de 6kW et est configuré pour émettre à 1064 nm.

Dans une variante de ce mode de réalisation, deux têtes de soudage laser, pouvant être déplacées indépendamment, peuvent être placées au-dessus du boitier 16.

On détaille ci-après les étapes du procédé selon l'invention de fixation de la fibre optique 14 au boitier 16 à l'aide de l'installation 10.

Dans une première étape, une première rondelle magnétisée 116, en alliage ferromagnétique, est plaquée à l'extrémité de la portion tubulaire 115 et une seconde rondelle 117 est plaquée contre la face intérieure de la paroi 114 en vis-à-vis de la lumière 113.

Dans une deuxième étape, la fibre optique 14 est insérée successivement dans la première rondelle 116, dans la lumière 113 puis dans la deuxième rondelle jusqu'à ce que la férule 110 dépasse légèrement de la rondelle 117 à l'intérieur du boitier 16 de sorte que la pointe de la fibre optique soit écartée de moins de 2 millimètres de la rondelle 117.

Dans ce mode de réalisation particulier de l'invention, les rondelles 116 et 117, sensiblement identiques, présentent une épaisseur de 0,3 millimètres. Le diamètre de la lumière 113 est supérieur à celui de la férule 110 afin de faciliter le passage de la férule au travers de la lumière 110 et l'écart entre les rondelles 116 et 117 est d'une valeur convenable pour prémunir la diode laser fibré d'un effet de levier de la férule.

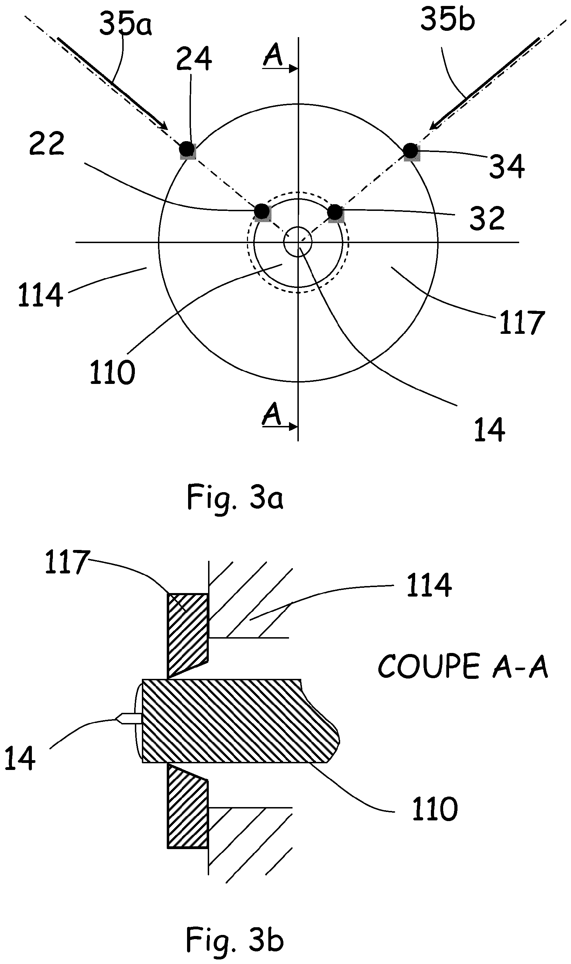

Comme on peut le voir sur la figure 3b, dans une vue en coupe de la rondelle 117, l'orifice central de la rondelle 117 est ajusté au diamètre de la férule 110. Cet orifice est par ailleurs biseauté par rapport à l'axe de la rondelle de façon à faciliter l'insertion de la férule dans la rondelle 117.

Dans une variante, les rondelles 116 et 117 peuvent être placées autour de la férule 110 au fur et à mesure de l'avancée de la fibre optique dans la direction de l'intérieur du boîtier.

Dans une troisième étape, la diode laser 11 est alimentée à puissance nominale de fonctionnement, par exemple à 10W dans le proche infrarouge, et l'ensemble de micro-positionnement 13 déplace progressivement la fibre optique 14 jusqu'à atteindre une position d'alignement avec la diode laser 11 dans laquelle le signal à la sortie de la fibre optique est d'amplitude maximale. Selon le même principe, un alignement préalable de la fibre optique 14 avec la diode laser peut être effectué en alimentant la diode laser 11 à 1 Ampère, près du seuil de l'émission laser.

Dans une étape suivante, le laser YAG 19 émet une impulsion dans une direction 119 sensiblement tangente au plan de la paroi 114 afin de réaliser un premier point de soudure 22 entre la deuxième rondelle 117 et la férule 110.

Dans le cadre de l'invention, on entend par une direction sensiblement tangente au plan de la paroi, une direction inclinée d'au plus 20° par rapport à la surface de la paroi 114.

Comme on peut le voir sur la figure 3a, dans une vue de face de la rondelle 117 après fixation de la fibre optique 14, un deuxième point de soudure 32 est réalisé simultanément entre la férule 110 et la rondelle 117 par le laser YAG 19 dans une direction d'incidence normale par rapport à la direction de la première impulsion.

Deux points de soudure à incidences normales 23 sont ensuite réalisés par le laser YAG 19 entre la première rondelle 116 et la férule 110, ce qui fixe l'espacement entre la pointe de la fibre optique 14 et la diode laser 11.

Il convient de noter que le fait de réaliser des points de soudure à incidences normales confère une très grande solidité à l'assemblage de la férule 110 et des rondelles 116 et 117.

Par la suite, la fibre optique 14 est alignée à nouveau avec la diode laser 11 à l'aide de l'ensemble de micro-positionnement 13 dans une position où le signal émis à la sortie de la fibre est maximal.

Le laser YAG 19 procède alors à deux séries de deux tirs laser simultanés afin de réaliser deux points de soudure supplémentaires 24 et 34 suivant des directions sensiblement perpendiculaires 35a et 35b (voir la figure 3a) entre chacune des rondelles 116 et 117 et respectivement la portion tubulaire 115 et la paroi 114, ce qui fige l'alignement de la fibre optique dans les directions perpendiculaires à son axe.

Dans une dernière étape, on dépose un alliage de soudure autour de la férule 110 au travers des perçages radiaux 26 prévus dans la portion tubulaire 115 et on chauffe la portion tubulaire 115 jusqu'à ce que l'alliage de soudure fonde et se répartisse tout autour de la férule. La soudure ainsi obtenue permet d'assurer l'étanchéité et l'herméticité de la paroi 115 au niveau de la lumière 113.

Le couvercle équipé d'un joint du boitier 16 peut ensuite être vissé sur le corps du boitier 16, ce qui scelle le boitier 16 hermétiquement.

### 6.2. Autre exemple de mode de réalisation de l'invention

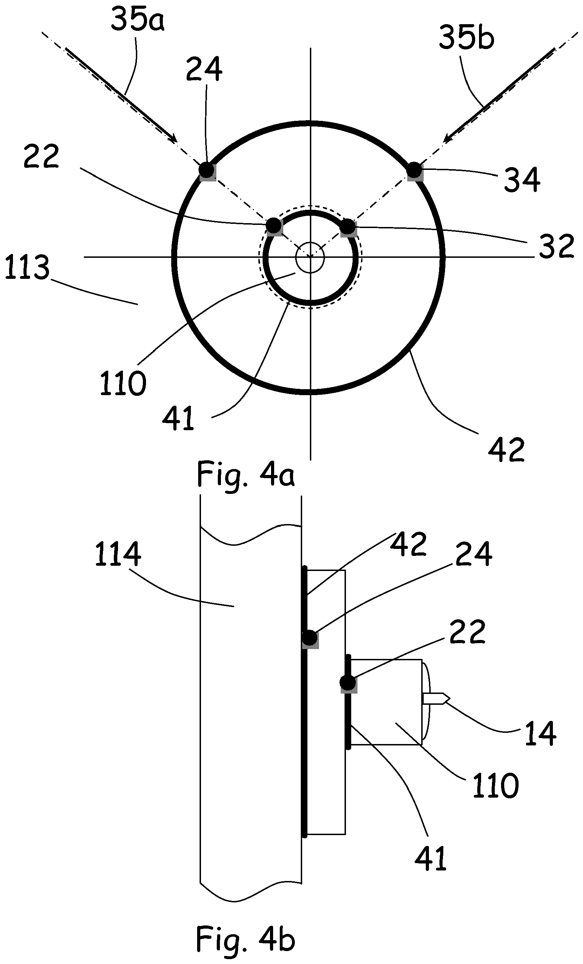

On a représenté sur les figures 4a et 4b, respectivement en vue de face et en coupe transversale, un autre exemple de mode de réalisation du soudage laser des rondelles 116 et 117 avec la férule 110 et la paroi 114.

Dans ce mode de réalisation particulier de l'invention, on réalise dans une première étape deux points de soudure 22, 32 entre la férule 110 et la rondelle 117 et deux points de soudure 24,34 entre la rondelle 117 et la paroi 114.

Dans une deuxième étape, un premier cordon de soudure circulaire 41 est réalisé entre la férule 110 et la rondelle 117 et un deuxième cordon de soudure 42 est réalisé entre la rondelle 117 et la paroi 114, de façon à assurer une fermeture hermétique de la paroi 114 au niveau de la lumière 113.

Dans des variantes des modes de réalisation de l'invention détaillés ci-dessus, il peut également être prévu que la face extérieure de la paroi 114 soit plane et ne présente pas de saillie.

### 6.3. Autre exemple de mode de réalisation de l'invention

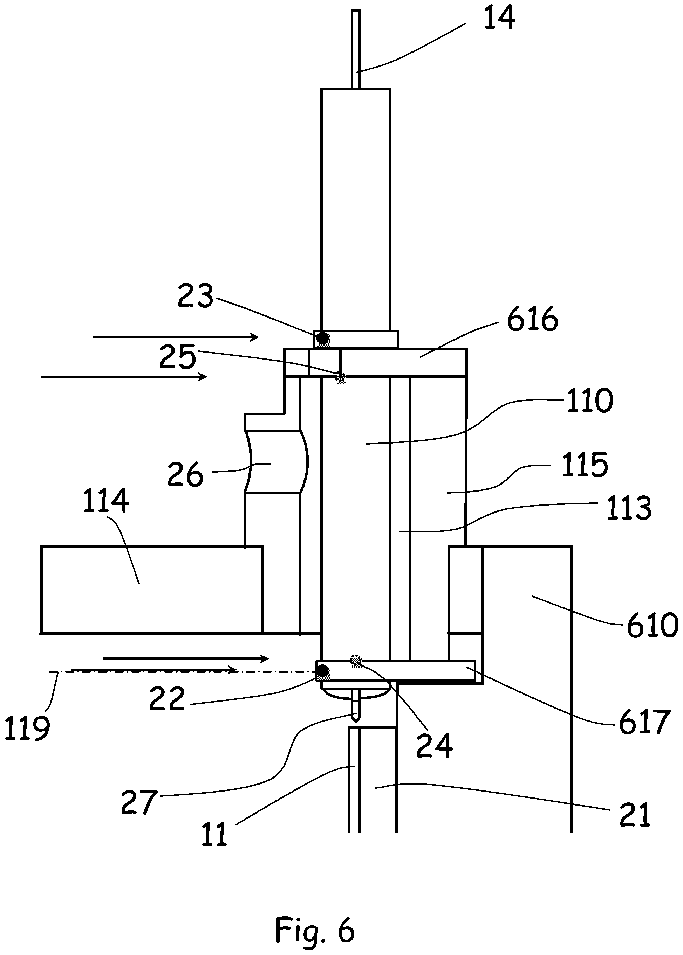

La figure 6 est une vue de détail en coupe d'un autre mode de réalisation de la fixation d'une fibre optique 14 avec un boîtier 610 destiné à contenir une diode laser 11.

Le boitier 610 présente une portion tubulaire 615 faisant saillie de part et d'autre de la paroi 114, dans laquelle est insérée une férule 110 brassée sur la fibre optique 14. Afin de faciliter la fixation de la férule 110 à l'intérieur du boitier 610 avec la portion tubulaire 615 et avec la première rondelle 617, la portion tubulaire 615 a été fraisée au niveau de son extrémité tournée vers la diode laser 11, afin d'en retirer la partie supérieure,

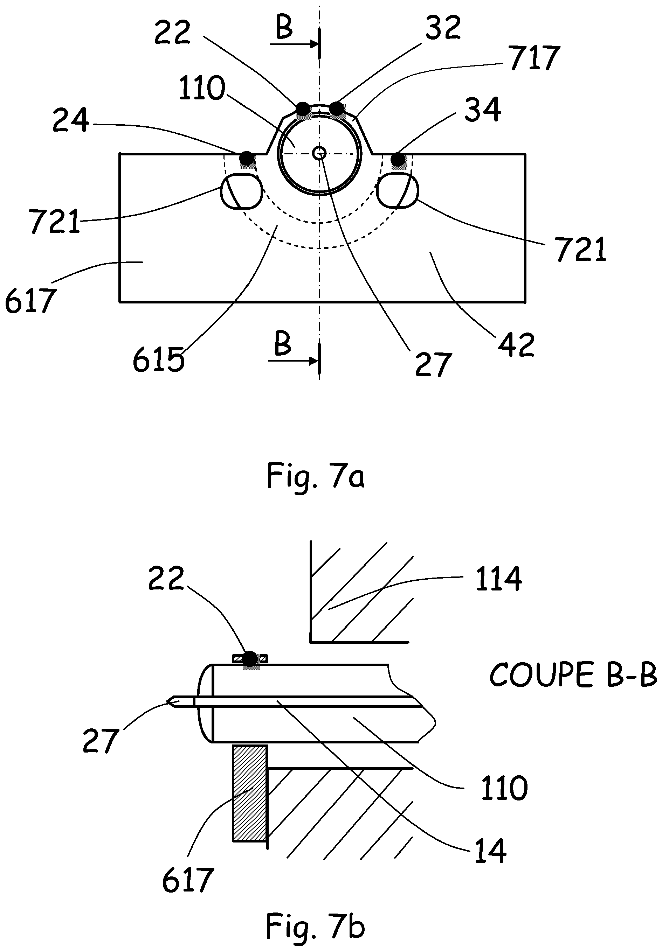

Comme le montrent les figures 7a et 7b, la rondelle 617, d'une épaisseur de 0,25 millimètre, présente une base rectangulaire épousant sensiblement la forme interne du boîtier 610. Elle permet un pré-positionnement de la rondelle 617 dans le boîtier 610, entre la portion tubulaire 615 et l'embase 21. Cette rondelle 617 comprend en outre deux lumières oblongues 721 destinées à évacuer la chaleur des soudures et assurer une répartition de températures sensiblement homogène dans la rondelle 617.

Tout comme dans le mode de réalisation précédemment décrit, la rondelle 617 est fixée avec la férule 110 par deux points de soudure 22 et 32 d'une part. Elle est fixée d'autre part à la portion tubulaire par deux points de soudure supplémentaires 24 et 34.

La rondelle 617 comprend une portion fine formant un arc aminci 717, dans la zone des points de soudure 22 et 32. Ainsi, lors du tir laser, le point de l'arc 717 éclairé par le laser fond et s'étale sur la férule 110, en comblant le jeu présent entre la rondelle 617 et la férule 110, ce qui augmente l'étendue, et donc la solidité, du point de soudure.

Dans ce mode de réalisation particulier de l'invention, la direction 119 de tir du laser YAG 19 pour réaliser les points de soudure 22 et 24, est sensiblement normale à l'axe longitudinal de la fibre optique 14 et parallèle à la paroi 114.

Pour réaliser les points de soudure 32 et 34, on oriente le laser YAG à 90° par rapport à la direction de tir correspondant aux points de soudures 22 et 24. L'assemblage ainsi obtenu est très résistant et supporte une pression de 100 N/m² sans que les points de soudure se brisent.

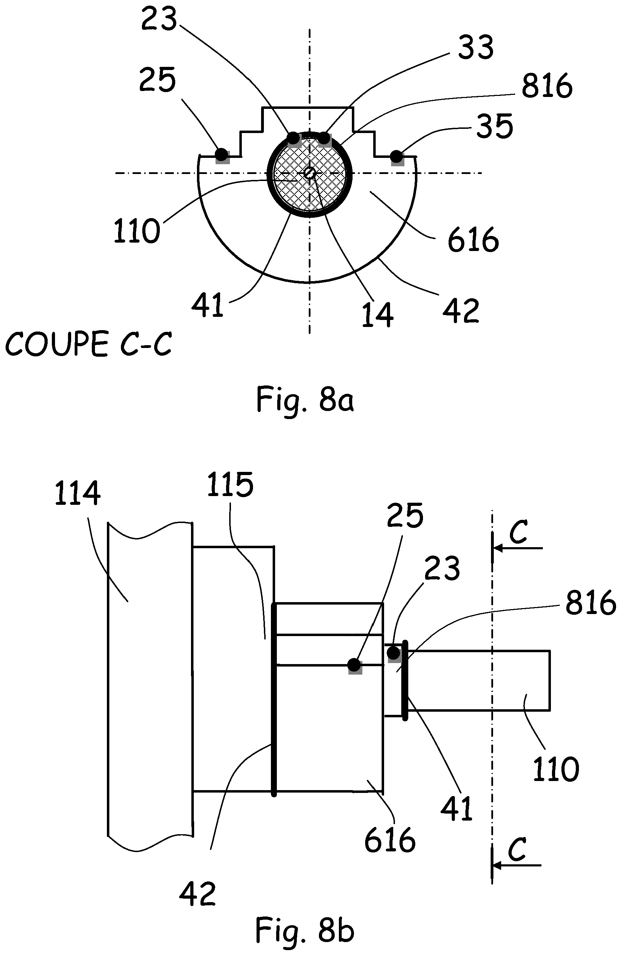

Les figures 8a et 8b illustrent la fixation, à l'extérieur du boitier 610, de la rondelle 616, d'une épaisseur de 0,8mm, avec, d'une part, la férule 110 et la portion tubulaire 615 d'autre part. Pour cela, deux points de soudures 23, 33 assurent la fixation de la férule 110 avec le téton mince 816 de la rondelle 616. De même, la rondelle 616 est fixée à la portion tubulaire 615 par deux points de soudures 25 et 35 à environ 140°. Ainsi, la rondelle 616 est maintenue parfaitement plaquée sur la portion tubulaire 615, notamment pendant la réalisation d'un cordon de soudure 42 d'étanchéité.

En outre, la rondelle 616 présente dans sa partie supérieure un profil en forme de gradins. Cette forme particulière permet de réaliser des tirs laser perpendiculairement à la surface de la rondelle au niveau des points de soudure 25 et 35. On peut ainsi apporter plus de puissance au niveau des points de soudure 25, 35, ce qui confère à ces derniers une solidité importante.

Enfin, un deuxième cordon de soudure 41 assure la fermeture hermétique du boîtier 610 au niveau du passage de la fibre optique 14.

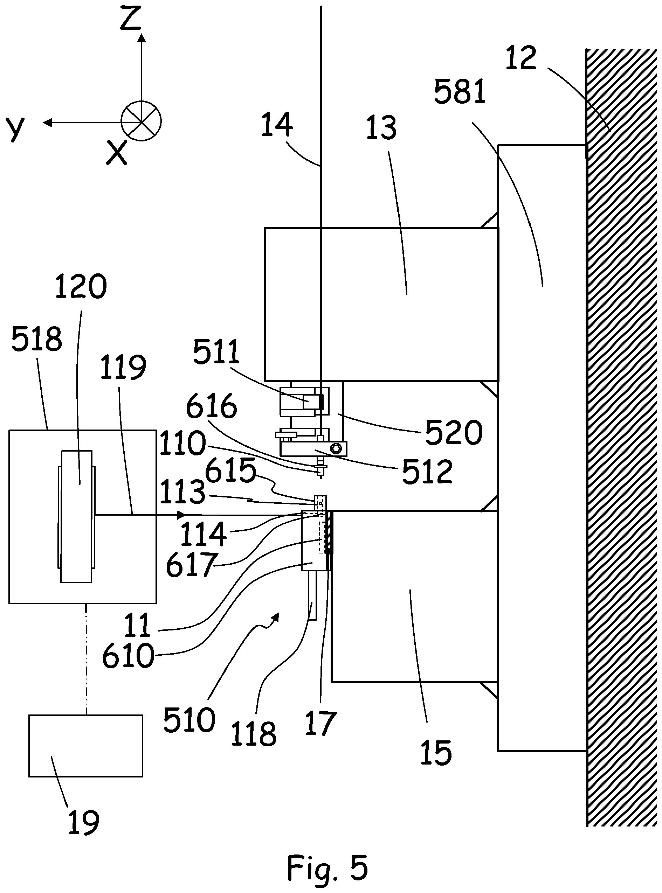

En référence à la figure 5, on va maintenant décrire le poste de montage 510 de la fibre optique 14 dans le boîtier optoélectronique 610 illustré en référence à la figure 6.

Dans ce mode de réalisation particulier de l'invention, le poste 510 comprend une table 581 motorisée destinée à déplacer le boitier 610 en face de la tête de soudage laser fixe 518, de sorte à aligner la zone à souder avec la lentille 120 de la tête de soudage 518. Sur cette table 581 sont fixés le socle 15 destiné à maintenir le boîtier 610 et l'ensemble 13 de micro-positionnement de la fibre optique 14 par rapport à ladite diode laser 11.

Le socle 15 se présente sous la forme d'un bloc parallélépipédique en invar, limitant les effets de la dilatation par échauffement. Le socle 15 est de plus équipé de dissipateurs thermiques (non représentés sur la figure 5) destinés à limiter les variations de hauteur du socle 15 selon l'axe Y, afin de conserver un positionnement précis de la fibre optique 14 par rapport à la diode laser 11, lorsqu'on réalise les points de soudure. Pour déplacer et orienter la fibre optique 14, l'ensemble 13, à six degrés de liberté, est équipé de platines de translation, de rotation et de basculement. En particulier, l'ensemble 13 se prolonge par une tête rotative 520 dont l'axe de la rotation est confondu avec l'axe de révolution de la fibre optique.

La tête rotative 520 comprend un premier préhenseur de fibre optique 511, également appelé première pince, pour maintenir la fibre optique, suivie d'un deuxième préhenseur 512, ou deuxième pince présentant une rainure en forme de V appuyant sur la férule 110. Le deuxième préhenseur 512 est vissé à la tête rotative 520 avec un couple de serrage supérieur ou égal à 15 centinewtons mètre.

Lors de la réalisation des points de soudure, la table motorisée 581 sous l'effet d'actionneurs (non représentés sur la figure 8), déplace le boitier 610 dans une position prédéterminée face au faisceau de la tête de soudage laser 518. Comme dans le mode de réalisation précédemment décrit, la tête de soudage laser 518 est reliée au laser YAG 19 émettant à 1064 nm pour une puissance crête maximale de 6kW, avec un spot du faisceau dont le diamètre minimal est de 0,1mm.

## Revendications

1. Procédé de fixation d'une fibre optique avec un support d'une diode laser dans une position où la fibre optique est en relation de couplage optique avec ladite diode laser, ledit support comprenant une lumière formée dans une paroi dudit support destinée au passage de ladite fibre, **caractérisé en ce qu'**il comprend les étapes suivantes :
- fixation hermétique d'une férule sur ladite fibre optique sensiblement à une extrémité de ladite fibre, ladite férule présentant une longueur supérieure à l'épaisseur de ladite lumière ;
- montage d'une première et d'une deuxième rondelles en vis-à-vis de ladite lumière de part et d'autre de ladite paroi, ladite première rondelle étant montée au contact de ladite paroi ;
- mise en place de ladite férule, de sorte que ladite férule dépasse desdites rondelles de chaque côté de ladite paroi comprenant une étape d'insertion de ladite fibre optique dans ladite première rondelle et dans ladite lumière ;
- alignement de ladite fibre optique avec ladite diode laser dans une position optimisant le couplage optique entre ladite fibre et ladite diode et soudage par laser desdites rondelles avec ladite férule comprenant une étape d'émission d'un faisceau laser sensiblement tangent au plan de la paroi et sensiblement perpendiculaire à l'axe de ladite fibre ;
- alignement de ladite fibre optique avec ladite diode laser dans une position optimisant le couplage optique entre ladite fibre et ladite diode et soudage par laser desdites rondelles avec ladite paroi comprenant une étape d'émission d'un faisceau laser sensiblement tangent au plan de la paroi et sensiblement perpendiculaire à l'axe de ladite fibre.

2. Procédé selon la revendication 1, **caractérisé en ce que** lors de ladite étape de montage, ladite deuxième rondelle est montée au contact de ladite paroi et **en ce que** lors de ladite étape d'insertion, ladite fibre optique est insérée dans lesdites première et deuxième rondelles et dans ladite lumière.

3. Procédé selon l'une quelconque des revendications 1 et 2, **caractérisé en ce que** lors de ladite étape d'insertion de ladite fibre, moins de 1,5 millimètre de l'extrémité de ladite fibre tournée vers ladite diode laser fait saillie hors de la rondelle plaquée contre la face de ladite paroi tournée vers ladite diode laser.

4. Procédé selon l'une quelconque des revendications 1 à 3, **caractérisé en ce que** lesdites étapes de soudage laser comprennent une étape de réalisation d'au moins un point de soudure entre ladite férule et une desdites rondelles et d'au moins un point de soudure entre ladite rondelle soudée à ladite férule et ladite paroi.

5. Procédé selon la revendication 4, **caractérisé en ce que** deux points de soudure sont réalisés entre ladite férule et au moins une desdites rondelles et/ou entre au moins une desdites rondelles et ladite paroi, sensiblement à angle droit l'un par rapport à l'autre par rapport à l'axe central de ladite fibre.

6. Procédé selon l'une quelconque des revendications 1 à 5, **caractérisé en ce que** ladite fibre optique est une fibre optique lentillée dont ladite extrémité présente un pic en forme de double biseau dont la pointe forme une arête.

7. Procédé selon la revendication 6, **caractérisé en ce que** ladite arête est courbe.

8. Procédé selon la revendication 6, **caractérisé en ce que** deux points de soudure sont réalisées entre ladite férule et au moins une desdites rondelles ou entre au moins une desdites rondelles et ladite paroi suivant une direction sensiblement parallèle à ladite arête.

9. Procédé selon l'une quelconque des revendications 1 à 8, **caractérisé en ce que** ladite lumière est au moins partiellement formée dans une partie saillante de ladite paroi tournée vers l'extérieur dudit support.

10. Procédé selon l'une quelconque des revendications 1 à 9, **caractérisé en ce que** l'orifice central desdites rondelles est biseauté par rapport à l'axe de la rondelle.

11. Procédé selon l'une quelconque des revendications 1 à 10, **caractérisé en ce que** ladite lumière présente un diamètre supérieur à celui de ladite férule.

12. Procédé selon l'une quelconque des revendications 1 à 11, **caractérisé en ce que** ledit support est un boitier apte à être scellé hermétiquement.

13. Procédé selon l'une quelconque des revendications 1 à 12, **caractérisé en ce qu'**il comprend une étape de dépose au travers d'au moins un orifice formé dans ladite paroi, d'un alliage de soudure autour de ladite férule destiné à assurer l'étanchéité de ladite paroi au niveau de ladite lumière.

14. Procédé selon l'une quelconque des revendications 1 à 13, **caractérisé en ce qu'**au moins un desdits points de soudure est réalisé sur la tranche d'une desdites rondelles

15. Procédé selon l'une quelconque des revendications 1 à 14, caractérisé en ladite première rondelle et/ou ladite deuxième rondelle présente une portion plus mince destinée à recevoir un desdits points de soudure.

## Patentansprüche

1. Verfahren zum Befestigen einer optischen Faser an einem Laserdiodenträger in einer Position, in der die optische Faser in optischer Kopplungsbeziehung mit der Laserdiode ist, wobei der Träger eine Öffnung aufweist, die in einer Wand des Trägers gebildet ist, die für den Durchgang der Faser bestimmt ist, **dadurch gekennzeichnet, dass** es die folgenden Schritte aufweist:
- hermetisches Befestigen einer Ferrule auf der optischen Faser im Wesentlichen an einem Ende der Faser, wobei die Ferrule eine Länge aufweist, die größer als die Dicke der Öffnung ist;
- Anbringen einer ersten und einer zweiten Unterlegscheibe gegenüber der Öffnung an beiden Seiten der Wand, wobei die Unterlegscheibe in Kontakt mit der Wand angebracht wird;
- Anordnen der Ferrule derart, dass die Ferrule auf jeder Seite der Wand aus den Unterlegscheiben herausragt, umfassend einen Schritt des Einfügens der optischen Faser in die erste Unterlegscheibe und in die Öffnung;
- Ausrichten der optischen Faser mit der Laserdiode in einer Position, die die optische Kopplung zwischen der Faser und der Diode optimiert, und Laserschweißen der Unterlegscheiben mit der Ferrule, umfassend einen Schritt des Emittierens eines Laserstrahls, der im Wesentlichen tangential zu der Wand und im Wesentlichen senkrecht zu der Achse der Faser ist;
- Ausrichten der optischen Faser mit der Laserdiode in einer Position, die die optische Kopplung zwischen der Faser und der Diode optimiert, und Laserschweißen der Unterlegscheiben mit der Wand, umfassend einen Schritt des Emittierens eines Laserstrahls, der im Wesentlichen tangential zu der Wand und im Wesentlichen senkrecht zu der Achse der Faser ist.

2. Verfahren nach Anspruch 1, **dadurch gekennzeichnet, dass** während des Schrittes des Anbringens die zweite Unterlegscheibe in Kontakt mit der Wand angebracht wird, und dass während des Schrittes des Einfügens die optische Faser in die erste und zweite Unterlegscheibe und in die Öffnung eingefügt wird.

3. Verfahren nach einem der Ansprüche 1 und 2, **dadurch gekennzeichnet, dass** während des Schrittes des Einfügens der optischen Faser weniger als 1,5 mm des Endes der optischen Faser, die der Laserdiode zugewandt ist, aus der Unterlegscheibe herausragt, die gegen die Wand gedrückt wird, die der Laserdiode zugewandt ist.

4. Verfahren nach einem der Ansprüche 1 bis 3, **dadurch gekennzeichnet, dass** die Schritte des Laserschweißens einen Schritt des Erstellens von mindestens einem Schweißpunkt zwischen der Ferrule und einer der Unterlegscheiben und von mindestens einem Schweißpunkt zwischen der Unterlegscheibe, die an die Ferrule angeschweißt wird, und der Wand aufweisen.

5. Verfahren nach Anspruch 4, **dadurch gekennzeichnet, dass** zwei Schweißpunkte zwischen der Ferrule und mindestens einer der Unterlegscheiben und/oder zwischen mindestens einer der Unterlegscheiben und der Wand im Wesentlichen im rechten Winkel zueinander gegenüber der zentralen Achse der Faser erstellt werden.

6. Verfahren nach einem der Ansprüche 1 bis 5, **dadurch gekennzeichnet, dass** die optische Faser eine mit Linse versehene optische Faser ist, deren Ende eine Spitze in Form einer Doppelabschrägung aufweist, deren Spitze eine Kante bildet.

7. Verfahren nach Anspruch 6, **dadurch gekennzeichnet, dass** das die Kante gekrümmt ist.

8. Verfahren nach Anspruch 6, **dadurch gekennzeichnet, dass** zwei Schweißpunkte zwischen der Ferrule und mindestens einer der Unterlegscheiben oder zwischen mindestens einer der Unterlegscheiben und der Wand in einer Richtung, die im Wesentlichen parallel zu der Kante ist, erstellt werden.

9. Verfahren nach einem der Ansprüche 1 bis 8, **dadurch gekennzeichnet, dass** die Öffnung mindestens teilweise in einem hervorstehenden Teil der Wand, die zur Außenseite des Trägers gewandt ist, gebildet wird.

10. Verfahren nach einem der Ansprüche 1 bis 9, **dadurch gekennzeichnet, dass** das zentrale Loch der Unterlegscheiben gegenüber der Achse der Unterlegscheibe abgeschrägt ist.

11. Verfahren nach einem der Ansprüche 1 bis 10, **dadurch gekennzeichnet, dass** die Öffnung einen Durchmesser aufweist, der größer als jener der Ferrule ist.

12. Verfahren nach einem der Ansprüche 1 bis 11, **dadurch gekennzeichnet, dass** der Träger ein Gehäuse ist, das geeignet ist, hermetisch abgedichtet zu werden.

13. Verfahren nach einem der Ansprüche 1 bis 12, **dadurch gekennzeichnet, dass** es einen Schritt des Aufbringens durch mindestens ein Loch, das in der Wand gebildet wird, einer Lötlegierung um die Ferrule, die dazu bestimmt ist, die Dichtheit der Wand an der Öffnung zu garantieren.

14. Verfahren nach einem der Ansprüche 1 bis 13, **dadurch gekennzeichnet, dass** mindestens einer der Schweißpunkte auf dem Rand von einer der Unterlegscheiben erstellt wird.

15. Verfahren nach einem der Ansprüche 1 bis 14, **dadurch gekennzeichnet, dass** die erste Unterlegscheibe und/oder die zweite Unterlegscheibe einen dünneren Abschnitt aufweist, der dazu bestimmt ist, einen der Schweißpunkte aufzunehmen.

## Claims

1. A method of securing an optical fiber with a laser diode carrier in a position where the optical fiber is in optical coupling relationship with said laser diode, said carrier comprising an opening formed in a wall of said carrier for passing said fiber, **characterised in that** it comprises the following steps:
- hermetic fastening of a ferule onto said optical fiber substantially at one end of said fiber, wherein said ferule exhibits a length greater than the thickness of said opening;
- assembly of a first and of a second washers opposite said opening on both sides of said wall, wherein said first washer is installed in contact with said wall ;
- placing said ferule, so that said ferule protrudes from said washers on each side of said wall comprising a step of inserting said optical fiber in said first washer and in said opening;
- aligning said optical fiber with said laser diode in a position optimising the optical coupling between said fiber and said diode and laser-welding of said washers with said ferule comprising a step of emitting a laser beam substantially tangent to the plane of the wall and substantially perpendicular to the axis of said fiber ;
- aligning said optical fiber with said laser diode in a position optimising optical coupling between said fiber and said diode and laser-welding of said washers with said wall comprising a step of emitting a laser beam substantially tangent to the plane of the wall and substantially perpendicular to the axis of said fiber.

2. The method according to claim 1, characterised that during the assembly step, said second washer is installed in contact with the wall and in that during said step of inserting, said optical fiber is inserted in said first and second washers and in said opening.

3. The method according to any of the claims 1 and 2, **characterised in that** during said step of inserting said fiber, less than 1.5 millimetre of the end of said fiber turned towards said laser diode protrudes outside of the washer pressed against the face of said wall turned towards said laser diode.

4. The method according to any of the claims 1 to 3, **characterised in that** said steps of laser-welding comprise a step of fulfilling at least one welding spot between said ferule and one of said washers and at least one welding spot between said washer welded to said ferule and said wall.

5. The method according to claim 4, **characterised in that** two welding spots are performed between said ferule and at least one of said washers and/or between at least one of said washers and said wall, substantially at right angle with respect to one another and to the central axis of said fiber.

6. The method according to any of the claims 1 to 5, **characterised in that** said optical fiber is a lensed optical fiber, wherein said extremity of which exhibits a double-bevelled peak with the apex forming a ridge.

7. The method according to Claim 6, **characterised in that** ridge is curved.

8. The method according to claim 6, **characterised in that** two welding spots are performed between said ferule and at least one of said washers and/or between at least one of said washers and said wall, following a direction substantially parallel to said ridge.

9. The method according to any of the claims 1 to 8, **characterised in that** said opening is at least partially formed in a protruding section of said wall turned outwards of said carrier.

10. The method according to any of the claims 1 to 9, **characterised in that** the central orifice of said washers is bevelled with respect to the axis of the washer.

11. The method according to any of the claims 1 to 10, **characterised in that** said opening exhibits a diameter greater than that of said ferule.

12. The method according to any of the claims 1 to 11, **characterised in that** said carrier is a housing which can be sealed hermetically.

13. The method according to any of the claims 1 to 12, **characterised in that** it comprises a step of depositing through at least one orifice formed in said wall, a welding alloy around said ferule for ensuring tightness of said wall at said opening.

14. The method according to any of the claims 1 to 13, **characterised in that** at least one of said welding spots is performed on the edge of one of said washers.

15. The method according to any of the claims 1 to 14, **characterised in that** said first washer and/or said second washer exhibits a thinned portion for receiving one of said welding spots.
